# EUROPEAN PATENT APPLICATION

(11) **EP 4 354 883 A1**
(43) Date of publication of application: **17.04.2024**
(21) Application number: 23820732.8
(22) Date of filing: 17.08.2023
(51) Int. Cl.: H04N 21/431, H04N 21/44, H04N 21/472, H04N 5/262, G06F 16/74

(54) **VIDEO PROCESSING METHOD AND APPARATUS, AND ELECTRONIC DEVICE**

(30) Priority: 17.08.2022 CN 202210987415
(71) Applicant: Beijing Zitiao Network Technology Co., Ltd., Beijing 100190 (CN)
(72) Inventor: MA, Dongdong, Beijing 100028 (CN); ZHOU, Yingzhi, Beijing 100028 (CN); ZHANG, Haoran, Beijing 100028 (CN); LIN, Yuyang, Beijing 100028 (CN); CHEN, Qitian, Beijing 100028 (CN); ZENG, Jizheng, Beijing 100028 (CN); WANG, Xiaoqian, Beijing 100028 (CN)
(74) Representative: Dentons UK and Middle East LLP
(86) International application number: PCT/CN2023/113581
(87) International publication number: WO 2024/037598

(57) **Abstract**

The disclosure provides a video processing method, an apparatus, an electronic device, a computer readable storage medium, a computer program product and a computer program. The method includes: obtaining a video edit draft, the video edit draft being used to record an initial multimedia material and indication information of a first video editing operation for the initial multimedia material, the initial multimedia material comprising a video material and/or an image material; extracting the initial multimedia material from the video edit draft; determining, based on the initial multimedia material, a target edit template that matches the initial multimedia material, the target edit template being used to record indication information of a second video editing operation; and processing, based on the target edit template, the initial multimedia material according to the second video editing operation, to obtain a first target video having an editing effect of the second video editing operation.

## Description

### CROSS-REFERENCE TO RELATED APPLICATIONS

The present disclosure claims priority to Chinese patent application No. 202210987415.7 filed on August 17, 2022, entitled "Video processing method, device and electronic equipment", which is hereby incorporated by reference in its entirety.

### FIELD

Embodiments of the present disclosure generally relate to the field of video processing, in particular to a video processing method, an apparatus, an electronic device, a computer readable storage medium, a computer program product and a computer program.

### BACKGROUND

Video edit drafts can record multiple multimedia materials and the edit operation data added by a user to the multiple multimedia materials in the process of video editing.

At present, when a user pauses editing of multimedia materials in an electronic device, the electronic device may save the video edit draft in the editing process. When the user needs to continue editing the multimedia materials, the user can load the video edit draft through the electronic device, so that the user can continue editing the multimedia materials by using the electronic device. However, if there are a large amount of video edit drafts stored at the electronic device, the user can only edit the video edit drafts in turn by using the electronic device, which leads to low efficiency of editing into a video.

### SUMMARY

The present disclousure provides a video processing method, an apparatus, an electronic device, a computer readable storage medium, a computer program product and a computer program.

In a first aspect, the present disclosure provides a video processing method, which comprises:
obtaining a video edit draft, the video edit draft being used to record an initial multimedia material and indication information of a first video editing operation for the initial multimedia material, the initial multimedia material comprising a video material and/or an image material;
extracting the initial multimedia material from the video edit draft;
determining, based on the initial multimedia material, a target edit template that matches the initial multimedia material, the target edit template being used to record indication information of a second video editing operation; and
processing, based on the target edit template, the initial multimedia material according to the second video editing operation, to obtain a first target video having an editing effect of the second video editing operation.

In a second aspect, the present disclosure provides a video processing apparatus, which comprises a first obtaining module, an extracting module, a determining module and a processing module, wherein:
the first obtaining module is configured to obtain a video edit draft, the video edit draft being used to record an initial multimedia material and indication information of a first video editing operation for the initial multimedia material, the the initial multimedia material comprising a video material and/or an image material;
the extracting module is configured to extract the initial multimedia material from the video edit draft;
the determining module is configured to determine, based on the initial multimedia material, a target edit template that matches the initial multimedia material, the target edit template being used to record indication information of a second video editing operation; and
the processing module is configured to process, based on the target edit template, the initial multimedia material according to the second video editing operation, to obtain a first target video having an editing effect of the second video editing operation.

In a third aspect, embodiments of the present disclosure provide an electronic device, comprising a processor and a memory,
the memory storing computer-executed instructions, and
the processor executing the computer-executed instructions stored in the memory to cause the processor to implement in the first aspect above and various video processing methods that may be involved in the first aspect.

In a fourth aspect, embodiments of the present disclosure provide a computer readable storage medium having computer-executed instructions stored thereon, which, when executed by a processor, cause the above first aspect and various video processing methods that may be involved in the first aspect to be implemented.

In a fifth aspect, the present embodiments provide a computer program product comprising a computer program which, when executed by a processor, causes the above first aspect and various video processing methods that may be involved in the first aspect to be implemented.

In a sixth aspect, the present embodiments provide a computer program. The computer program, when is executed by a processor, causes the above first aspect and various video processing methods that may be involved in the first aspect to be implemented.

The present disclosure provides a video processing method, an apparatus, an electronic device, a computer readable storage medium, a computer program product and a computer program. The electronic device may obtain a video edit draft used to record the initial multimedia material and indication information for the first video editing operation for the initial multimedia material, the initial multimedia material including a video material and/or an image material; extracts the initial multimedia material from the video edit draft; determines the target edit template that matches the initial multimedia material based on the initial multimedia material, the target edit template being used to record indication information for the second video editing operation; and processes the initial multimedia material according to the second video editing operation based on the target edit template to obtain a first target video having the editing effect of the second video editing operation.

### BRIEF DESCRIPTION OF THE DRAWINGS

In order to more clearly illustrate the technical solutions in embodiments of the present disclosures or related technologies, a brief introduction will be made to the drawings required for the embodiments or related technical descriptions. Obviously, the drawings described below are some embodiments of the present disclosure. For those skilled in the art, other drawings can be obtained without creative labor based on these drawings.
FIG. 1 is a schematic diagram of an application scenario provided in an embodiment of the present disclosure.
FIG. 2 is a flowchart of a video processing method provided in an embodiment of the present disclosure.
FIG. 3 is a schematic diagram of a video edit draft provided in the present disclosure.
FIG. 4 is a schematic diagram of the process of enabling an automatic draft video creation function provided in an embodiment of the present embodiment.
FIG. 5 is a schematic diagram of a process for obtaining a first target video provided in an embodiment of the present disclosure.
FIG. 6 is a schematic diagram of a method for displaying a first target video provided in an embodiment of the present disclosure.
FIG. 7 is a schematic diagram of a process for obtaining a target image provided in an embodiment of the present disclosure.
FIG. 8 is a schematic diagram of the process of obtaining the first cover provided in an embodiment of the present embodiment.
FIG. 9 is a schematic diagram of the process of displaying the first cover provided in an embodiment of the present disclosure.
FIG. 10A is a schematic diagram of a process for deleting a first target video provided in an embodiment of the present disclosure.
FIG. 10B is a schematic diagram of another process for deleting the first target video provided in an embodiment of the present disclosure.
FIG. 11 is a schematic diagram of a method for replacing a target edit template provided in an embodiment of the present disclosure.
FIG. 12 is a schematic diagram of the process of replacing the target edit template provided in an embodiment of the present embodiment.
FIG. 13 is a schematic diagram of the structure of a video processing apparatus provided in an embodiment of the present disclosure.
FIG. 14 is a schematic diagram of another video processing apparatus provided in an embodiment of the present disclosure.
FIG. 15 is a schematic diagram of the structure of an electronic device provided in an embodiment of the present disclosure.

### DETAILED DESCRIPTION

Here, example embodiments will be described in detail, which are shown in the accompanying drawings. When the following description relates to the drawings, unless otherwise indicated, the same numbers in different drawings represent the same or similar elements. The embodiments described in the following example embodiments do not represent all embodiments consistent with the present disclosure. Instead, they are only examples of devices and methods consistent with some aspects of the present disclosure as detailed in the appended claims.

For ease of understanding, the concepts involved in the present disclosure are described below.

Electronic devices are devices with wireless transceiver functions. Electronic devices may be deployed on land, including indoor or outdoor, handheld, wearable, or onboard devices, and they may also be deployed on water (such as ships). The electronic devices may be mobile phones, tablets, computers with wireless transceiver functions, virtual reality (VR) electronic devices, augmented reality (AR) electronic devices, wireless teminals in industrial control, vehicle-mounted electronic devices, wireless teminals in self-driving, wireless electronic devices in remote medical, wireless electronic devices in smart grids, wireless electronic devices in transportation safety, wireless electronic devices in smart cities, wireless electronic devices in smart homes, wearable electronic devices, etc. The electronic device involved in embodiments of the present disclosures can also be referred to as a teminal, user equipment (UE), access electronic device, vehicle-mounted terminal, industrial control terminal, UE unit, UE station, mobile station, mobile station, remote station, remote electronic device, mobile device, UE electronic device, wireless communication device, UE agent or UE device, etc. The electronic device can also be fixed or mobile.

Initial multimedia materials: initial multimedia materials include video materials and/or image materials. For example, the initial multimedia materials in the video editing process may include a plurality of video materials, a plurality of image materials, and a plurality of video materials and image materials. There is no limitation in this regard in embodiments of the present disclosure.

Video edit draft: a video edit draft is used to record an initial multimedia material and indication information of a first video editing operation on the initial multimedia material. For example, the video edit draft may include multiple video materials corresponding to the initial multimedia material, as well as the number of editing operations on the initial multimedia material performed by the user. For example, an electronic device merges video A and video B, adds an transition effect between video A and video B, and adds an opening effect to the first frame of video A. When the electronic device stops editing video A and video B, the electronic device may create video edit drafts corresponding to video A and video B. The video edit draft may include video A, video B, an operation for adding an transition effect between video A and video B, as well as an operation for adding an opening effect to the first frame of video A. Optionally, the video edit draft may record the user's manual editing operation on the initial multimedia material, and the video edit draft may also record the automatic editing operation in the video edit application on the initial multimedia material through a preset edit template. There is no limitation in this regard in embodiments of the present disclosure.

Target edit template: The target edit template is used to record indication information for the second video editing operation. For example, the target edit template can add a second video editing operation to the initial multimedia material to obtain the first target video corresponding to the initial multimedia material, where the first target video has the editing effect of the second video editing operation. For example, if the video editing operation recorded by the target edit template includes adding a transition effect A between the first video and the second video and adding a transition effect B between the second video and the third video, then in the case that the electronic device performs a video editing processing on videos A, B, and C through the target edit template, a transition effect A may be added between videos A and B, and a transition effect B may be added between videos B and C.

In related technologies , when a user pauses the editing of multimedia materials in a electronic device, the electronic device may store the video edit draft during the editing process. For example, if the electronic device stops video editing between Video A and Video B after adding an transition effect, the electronic device may store the video edit draft during the video editing process, which may include Video A, Video B, and an operation of adding a transition effect to Video A and Video B. After loading the video edit draft through the electronic device, the user may continue editing the multimedia material. However, if the number of the video edit drafts is large, the user may only edit the video edit drafts in turn by using the electronic device, which leads to low efficiency in editing the drafts into a film.

In order to solve technical problems in the related technologies, the present disclosure provides a video processing method. The electronic device may obtain a video edit draft for recording initial multimedia materials and a first video editing operation for the initial multimedia materials, extract the initial multimedia materials from the video edit draft, parse the content of the initial multimedia materials, obtain a content tag corresponding to the initial multimedia materials, determine, basd on the content tag, a target edit template that matches the initial multimedia materials from a pluratliy of preset edit templates, add the second video editing operation corresponding to the target edit template to the initial multimedia materials, and obtain the first target video. The first target video has an editing effect of the second video editing operation, and the multimedia material in the first target video is the initial multimedia material. In this way, every time when the electronic device creates a video edit draft, the electronic device may automatically match the corresponding target edit template for the initial multimedia material in the video edit draft, and edit the initial multimedia material through the editing operation corresponding to the target edit template to obtain a video corresponding to the video edit draft. Therefore, the electronic device may reduce the complexity of the editing operation and improve the efficiency of editing into a video.

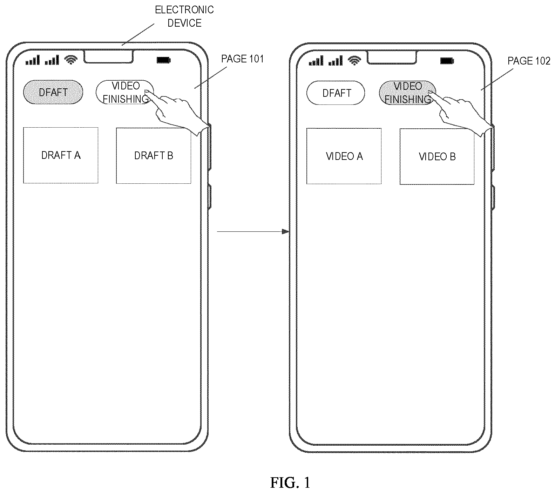

In the following, an application scenario of embodiments of the present disclosure will be discussed with reference to FIG. 1.

FIG. 1 is a schematic diagram of an application scenario provided by an embodiment of the present disclosure. Reference is made to FIG. 1, which includes an electronic device. The electronic device includes a page 101 and a page 102. The page 101 is a draft page, which includes draft controls, film controls, draft A, and draft B. When the user clicks on the film control, the electronic device displays page 102, which includes draft controls, film controls, video A, and video B. Among them, video A is the video after the edit template processes the initial multimedia material in draft A, and video B is the video after another edit template processes the initial multimedia material in draft B. In this way, each time the electronic device edits a video edit draft, it can create the video corresponding to the video edit draft, thereby reducing the complexity of video editing and improving the efficiency of video editing.

It is to be understood that FIG. 1 is only an example application scenario of embodiments of the present disclosure and is not intended to limit the application scenario of embodiments of the present disclosure.

Detailed descriptions will be made below by using embodiments to illustrate the technical solution of the present disclosure and how the technical solution of the present disclosure solves the above technical problems. The following embodiments may be combined with each other, and details related to the same or similar concepts or processes may not be repeated in some embodiments. Embodiments of the present disclosure will be described in conjunction with the accompanying drawings.

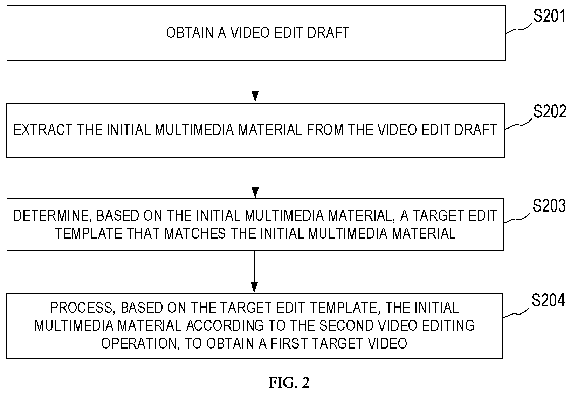

FIG. 2 is a schematic diagram of a video processing method provided in embodiments of the present disclosure. As shown in FIG. 2, the method may include:
S201, obtaining a video edit draft.

Embodiments of the present disclosure may be performed by an electronic device or a video processing device provided in the electronic device. The video processing device may be implemented using software, and the video processing device may also be implemented using a combination of software and hardware.

Optionally, the video edit draft is used to record the initial multimedia material and the indication information of the first video editing operation for the initial multimedia material. Optionally, the initial multimedia material may be a multimedia material in the video editing process. For example, when the user edits a video material A and a video material B, initial multimedia materials in the video edit draft include the video material A and the video material B. When the user edits an image material A and an image material B, the initial multimedia materials in the video edit draft include the image material A and the image material B.

Optionally, when the user stops editing the initial multimedia material, the electronic device may obtain the video edit draft corresponding to the initial multimedia material, and may continue to edit the initial multimedia material by loading the video edit draft again.

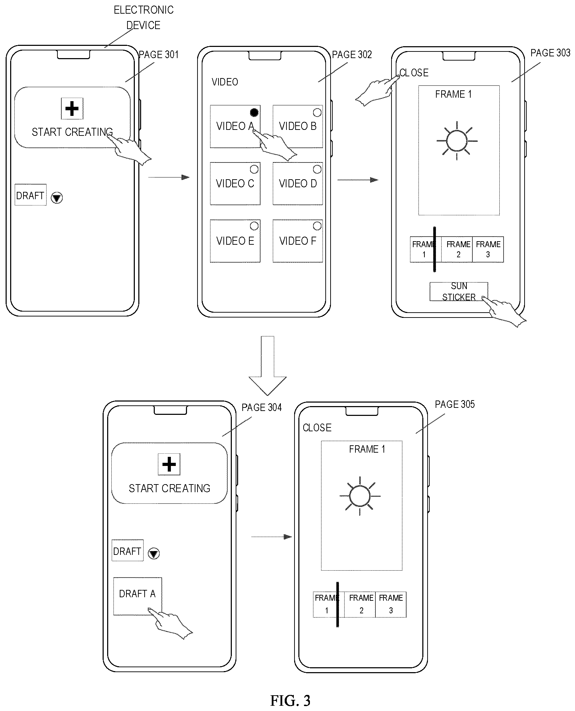

In the following, the video edit draft is discussed with reference to FIG. 3.

FIG. 3 is a schematic diagram of a video edit draft provided in an embodiment of the present disclosure. Reference is made to FIG. 3, which includes an electronic device. The electronic device includes a page 301, a page 302, a page 303, a page 304, and a page 305. The page 301 includes a start creating control and a draft control, and the number of drafts in the draft area under the draft control is 0. When the user clicks the start creating control, page 301 jumps to page 302 on the electronic device.

Referring to page 302, which includes video A, video B, video C, video D, video E, and video F. When the user clicks on video A and determines, page 302 jumps to page 303 on the the electronic device. Page 303 is an editing page of video A including 3 frames, and the position of a editing track is the first frame of video A. When the user clicks on the sun sticker, the electronic device adds the sun sticker to a frame. When the user clicks on the close control, page 303 jumps to page 304 on the electronic device.

Referring to page 304, which includes a start creating control and a draft control. The area under the draft control includes Draft A, which is an edit draft corresponding to Video A. When the user clicks on Draft A, page 304 jumps to page 305 on the electronic device, where page 305 is the editing page of Video A. Page 305 includes frame 1, frame 2 and frame 3. Among them, frame 1 includes the sun sticker from the last editing. The user may continue editing Video A by touching page 305.

Optionally, the electronic device may obtain draft data corresponding to multimedia information in the following two scenarios:

Scenario 1: The video edit application does not enable the automatic draft video creation function.

Optionally, the video edit application is used to edit multimedia materials. For example, the video edit application may be an application in an electronic device, and videos, images and other materials may be edited through the video edit application.

If the video edit application does not enable the automatic draft video creation function, the first page will be displayed. Optionally, the first page is a function setting page. For example, the first page may be a setting page corresponding to the video edit application, and multiple functions of the video edit application may be controlled through multiple controls in the first page.

In response to the triggering operation of the first control in the first page, the automatic draft video creation function is enabled, and the video edit draft is obtained. Optionally, the first control is a switch control of the automatic draft video creation function. For example, when the switch control of the automatic draft video creation function is turned off, the video edit application does not enable the automatic draft video creation function. If the user clicks on the switch control of the automatic draft video creation function in the function setting page, the switch control of the automatic draft video creation function is turned on, and the video edit application enables the automatic draft video creation function.

Optionally, after the video edit application enables the automatic draft video creation function, the video edit application may scan a plurality of video edit drafts to obtain the plurality of video edit drafts.

It should be noted that after the video edit application enables the automatic draft video creation function, the video edit application may scan a preset number of video edit drafts to obtain the preset number of video edit drafts. For example, the electronic device includes 100 video edit drafts. When the automatic draft video creation function in the video edit application is enabled, the video edit application may obtain 10 video edit drafts out of 100 video edit drafts (such as obtaining the first 10 video edit drafts in the order of creating time). In this way, the video edit application may create a video corresponding to the latest video edit drafts, avoiding the time-consuming process of obtaining all video edit drafts, thereby improving the user experience and improving the efficiency of editing into a video.

Optionally, the electronic device may display the first page according to the following feasible implementation: displaying the first page in response to a touch operation on the second control in the second page. Optionally, the second page is used to present the first target video, and the first control is used to jump to the first page, where the first target video is the finished video corresponding to the video edit draft. For example, the second page may be an aggregated page of the finished video obtained through processing the video edit draft with an automatic video creation function by the video edit application. When the automatic draft video creation function in the video edit application is not enabled, there is no finished video to be displayed on the second page. The video edit application may display the second control on the second page. When the user clicks the second control, the video edit application may jump to the function setting page.

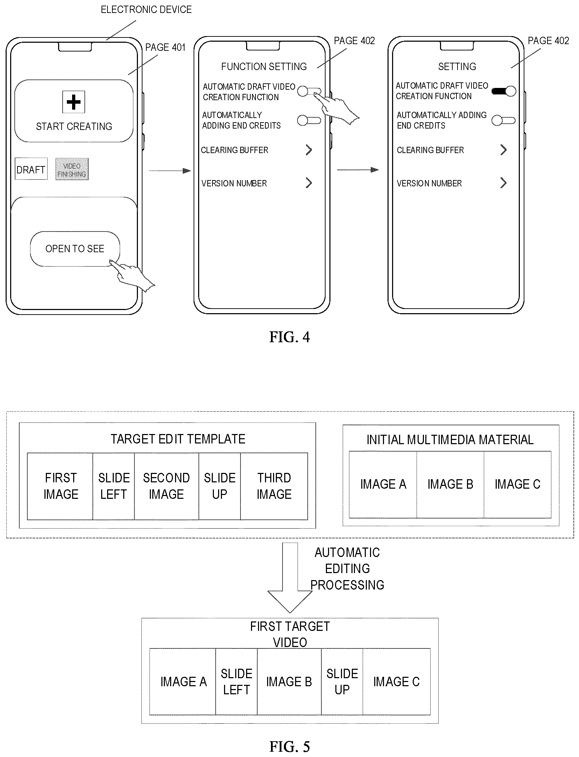

In the following, a process of enabling the automatic draft video creation function of the video edit application will be discussed with reference to FIG. 4.

FIG. 4 is a schematic diagram of a process for enabling the automatic draft video creation function provided in an embodiment of the present disclosure. Referring to FIG. 4, which includes an electronic device. The display page of the electronic device is a page where the electronic device runs a video edit application, and the display pages of the electronic device includes pages 401 and 402. Page 401 includes a start creating control, a draft control, and a video finishing control. The area under the framing control of page 401 is the second page, and the second page includes an "open to see" control (the second control). When the user clicks the "open to see" control, the electronic device jumps from page 401 to page 402.

Reference is made to page 402. Page 402 is the function setting page (the first page). The function setting page includes a selection control for the automatic draft video creation function (the first control), a selection control for automatically adding end credits, a query control for clearing buffer, and a query control for version number. Among them, the selection control for the automatic draft video creation function is turned off. When the user clicks on the selection control for the automatic draft video creation function, the selection control for the automatic draft video creation function is turned on, and the video edit application turns on the first function and obtains the video edit draft.

In this case, if the video edit application does not enable the automatic draft video creation function, the automatic draft video creation function may be enabled by the user's click operation. After the automatic draft video creation function is enabled, the video edit application may scan a preset number of video edit drafts to obtain a preset number of video edit drafts, avoiding the time-consuming process of obtaining all video edit drafts, thereby improving the user experience and improving the efficiency of editing into a video.

Scenario 2: The video edit application has enabled the automatic draft video creation function.

If the video edit application has enabled the automatic draft video creation function, the video edit draft is obtained at the end of editing of the initial multimedia material. For example, if the video edit application has enabled the automatic draft video creation function, the video edit application may create a video corresponding to the video edit draft. At the end of editing of the initial multimedia material, the video edit application may create a video edit draft corresponding to the initial multimedia material, and then obtain a video edit draft.

In this case, when the video edit application enables the automatic draft video creation function, the video edit application may obtain the video edit draft corresponding to the initial multimedia material at the end of each editing, thereby improving the user experience and improving the efficiency of editing into a video.

S202, extracting initial multimedia materials from video edit drafts.

Optionally, the electronic device may obtain the initial multimedia material in the video edit draft. For example, when the electronic device edits Video A and Video B through a video edit application, after the editing is completed, the electronic device may obtain the video edit draft and obtain Video A and Video B in the video edit draft.

S203, determining the target edit template that matches the initial multimedia material based on the initial multimedia material.

Optionally, the initial multimedia material includes video material and/or image material. Optionally, the target edit template is used to record indication information for the second video editing operation. Optionally, the electronic device may determine the target edit template that matches the initial multimedia material according to the following feasible implementations: parsing the content of the initial multimedia material to obtain the content tag corresponding to the initial multimedia material, and determining the target edit template that matches the initial multimedia material according to the content tag.

Optionally, the content tag is used to indicate the characteristics of the initial multimedia material. For example, the electronic device may determine the material type, material quantity, material duration, and other information of the initial multimedia material based on the content tag corresponding to the initial multimedia material.

Optionally, the electronic device may obtain the content tag corresponding to the initial multimedia material according to the following feasible implementations: processing the initial multimedia material with the first model to obtain the content tag. Optionally, the first model is obtained by learning from a plurality of sets of samples, whereby the plurality of sets of samples include the sample multimedia material and the sample content tag corresponding to the sample multimedia material. For example, for sample multimedia material A, by obtaining the sample content tag A corresponding to sample multimedia material A, a set of samples are obtained. The set of samples include the sample multimedia material A and the sample content tag A. In this way, a plurality of sets of samples may be obtained.

Optionally, the target edit template that matches the initial multimedia material is obtained based on the content tag. Specifically, if the content tag indicates that the number of images of the initial multimedia material is greater than or equal to the first threshold, or if the content tag indicates that the number of videos of the initial multimedia material is greater than or equal to the second threshold, or if the content tag indicates that the video duration of the initial multimedia material is greater than or equal to the third threshold, the target edit template is determined from the plurality of preset edit templates based on the content tag. For example, in the case that the initial multimedia material includes image materials, if the number of image materials is greater than 2, the electronic device may determine the target edit template from the plurality of preset edit templates based on the content tag; and if the number of video materials is 1, and the the duration of the video material is larger than 2 seconds, the electronic device may determine the target edit template corresponding to the video material from the plurality of preset edit templates based on the content tag.

Optionally, the electronic device may obtain the plurality of preset edit templates from the memory, and the electronic device may also obtain the plurality of preset edit templates from a server. This does not suggest any limitation to embodiments of the present disclosure.

Optionally, the target edit template is determined from the pluratily of preset edit templates based on the content tag. Specifically, template features corresponding to the pluratily of preset edit templates are obtained, and the target edit template that matches the initial multimedia material is determined from the pluratily of preset edit templates based on the content tag and the pluratily of template features. For example, the electronic device may determine the first matching degree between the content tag (which may be preprocessed by the encoder) and each template feature (such as, obtaining cosine similarity, Euclidean distance, etc.between the content tag and the template feature) based on the content tag, and determine the preset edit template corresponding to the largest matching degree in the first matching degree as the target edit template. For example, if the preset edit template corresponding to the first matching degree A is edit template A, the preset edit template corresponding to the first matching degree B is edit template B, and if the first matching degree A is less than the first matching degree B, the electronic device determines edit template B as the target edit template.

It should be noted that the electronic device may obtain the template features corresponding to the preset edit template by using a feature extraction algorithm, and the electronic device may also obtain the template features corresponding to the preset edit template by means of model training. This does not suggest any limitation to embodiments of the present disclosure.

S204, processing, based on the target edit template, the initial multimedia material according to the second video editing operation to obtain the first target video.

Optionally, the first target video has an editing effect of the second video editing operation. The electronic device may process the initial multimedia material through the target edit template to obtain the first target video. For example, if the second video editing operation in the target edit template is to add a transition effect between the first video and the second video, and the initial multimedia material includes video material A and video material B, then after the video edit application performs editing processing on video A and video B with the target edit template, the transition effect exists between the video material A and the video material B in the obtained first target video.

Next, the process of obtaining the first target video will be explained in conjunction with FIG. 5.

FIG. 5 is a schematic diagram of a process for obtaining a first target video provided in an embodiment of the present disclosure. Reference is made to FIG. 5, which includes a target edit template and an initial multimedia material. The target edit template may automatically edit three images, the target edit template may add a slide left effect between the first image and the second image, and the target edit template may add an slide up effect between the second image and the third image. The initial multimedia material includes image A, image B, and image C. The initial multimedia material is automatically edited by the target edit template to obtain the first target video. In the first target video, the first frame is image A, the second frame is image B, and the third frame is image C. The playing effect between image A and image B is a slide left effect, and the playing effect between image B and image C is a slide up effect.

It should be noted that each time the electronic device obtains the video edit draft corresponding to the initial multimedia material, it may create the first target video corresponding to the video edit draft. Therefore, after the electronic device creates the first target video corresponding to the video edit draft, if the user performs editing processing on the video edit draft again, the electronic device may update the first target video according to the user's editing processing of the video edit draft (for example, when adding a new multimedia material to the video edit draft, the first target video will also be updated with new content). If the user has viewed the first target video corresponding to the video edit draft (the electronic device has played the first target video), the electronic device will not update the first target video.

Embodiments of the present disclosure provide a video processing method. When the initial multimedia material is edited, the electronic device may obtain the video edit draft corresponding to the initial multimedia material, and extract the initial multimedia material from the video edit draft. The electronic device may parse the content of the initial multimedia material to obtain the content tag corresponding to the initial multimedia material, and determine, based on the content tag, the target edit template that matches the initial multimedia material among a plurality of preset edit templates. By processing the initial multimedia material with the target edit template, the first target video with the effect of the second video editing operation is obtained. In this way, based on the content tag corresponding to the initial multimedia material, the electronic device may accurately obtain the target edit template corresponding to the initial multimedia material, which improves the accuracy of video editing. Moreover, the electronic device may automatically add the corresponding edit template to the initial multimedia material in a video edit draft each time the electronic device creates the video edit draft, thereby creating a finished video corresponding to the video edit draft. In this way, the complexity of the editing operation can be redued and the efficiency of editing can be improved.

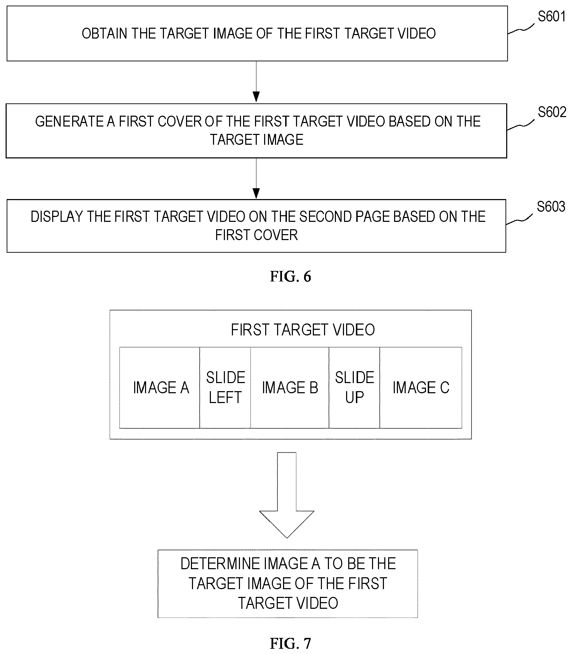

Based on the embodiments shown in FIG. 2, after obtaining the first target video corresponding to the initial multimedia material in the above video processing method, the above video processing method further includes the process of displaying the first target video. In the following, the method of displaying the first target video will be discussed in conjunction with FIG. 6.

FIG. 6 is a schematic diagram of a method for displaying a first target video provided in an embodiment of the present disclosure. Reference is made to FIG. 6. The method flow includes:
S601, obtaining the target image of the first target video.

Optionally, the target image may be the cover image of the first target video. Optionally, the electronic device may obtain the target image from video frames in the first target video. For example, the electronic device may obtain the first frame of the first target video and determine the first frame as the target image of the first target video. For example, the electronic device may obtain key frames in the first target video based on optical flow information and determine any of the key frames as the target image. The electronic device may also obtain the target image of the first target video in other ways, which does not suggest any limitation to embodiments of the present disclosure.

Next, the process of obtaining the target image will be discussed in connection with FIG. 7.

FIG. 7 is a schematic diagram of a process for obtaining a target image provided in an embodiment of the present disclosure. Reference is made to FIG. 7, which includes a first target video. The first target video includes image A, image B, and image C. The playing effect between image A and image B is a slide left effect, and the playing effect between image B and image C is an slide up effect. The electronic device determines that the first frame in the first target video is image A, and determines image A as the target image of the first target video.

S602, generating a first cover of the first target video based on the target image.

Optionally, the electronic device may create a first cover of the first target video based on the target image. For example, the electronic device may determine the target image as the first cover, and when the electronic device displays the first target video, the target image of the first target video may be displayed.

Optionally, the electronic device may generate a first cover of the first target video according to the following feasible implementation: obtaining the video content of the first target video. Optionally, the electronic device may determine the video content of the first target video through the content of a plurality of key frames in the first target video. For example, if the plurality of key frames in the first target video include cats, the electronic device determines that the video content of the first target video is cats. If the plurality of key frames of the first target video are oceans, the electronic device determines that the video content of the first target video is oceans.

Optionally, the electronic device may obtain the video content of the first target video with a preset model. For example, the electronic device may recognize the video frames in the first target video with an image recognition model, and then obtain the video content of the first target video. For example, if the image recognition model determines that most of the video frames in the first target video include dogs, the electronic device determines that the video content of the first target video is dogs; and if the image recognition model determines that most of the video frames in the first target video include mountains, the electronic device determines that the video content of the first target video is mountains.

The target text is determined based on the video content. For example, the electronic device may obtain the preset correspondence between the video content and the target text, and then determine the target text corresponding to the video content based on the video content of the first target video and the preset correspondence. For example, if the video content is animals such as cats, dogs, and the like, the target text may be pets, and if the video content is scenery such as mountains and seas, the target text may be travel.

The first cover of the first target video is generated based on the target image and target text. For example, the electronic device may add target text at the bottom, top, and other positions of the target image to obtain the first cover corresponding to the first target video.

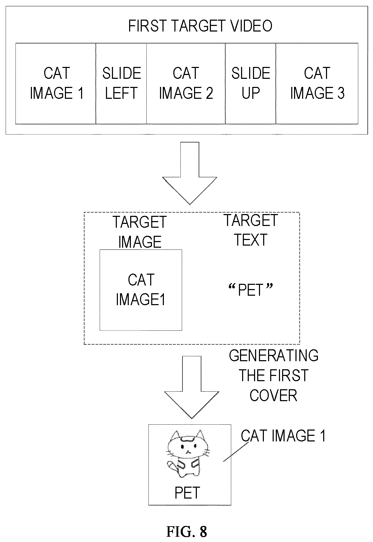

Next, the process of obtaining the first cover will be discussed in connection with FIG. 8.

FIG. 8 is a schematic diagram of a process for obtaining a first cover provided in embodiments of the present disclosure. Reference is made to FIG. 8, which includes a first target video. The first target video includes a cat image 1, a cat image 2, and a cat image 3. There is a slide left effect between the cat images 1 and 2, and an slide up effect between the cat images 2 and 3. The electronic device determines the cat image 1 in the first target video as the target image, and determines that the first target video is playing a pet based on the video content of the first target video. Therefore, the electronic device determines that the target text is a pet. By using the target image and the target text, the first cover of the first target video is obtained, where the image of the first cover is a cat image 1, and the bottom of the first cover includes the text pet.

S603, displaying the first target video on the second page based on the first cover.

Optionally, the electronic device may display the first target video on the second page according to the following feasible implementation: obtaining the creation time of the first target video, and displaying the first cover corresponding to the first target video on the second page according to the creation time. For example, the electronic device may obtain the timestamp corresponding to the creation time of the first target video, and sort a plurality of first target videos based on the timestamps to obtain a sorting order, and then display first covers corresponding to the first target videos on the second page based on the sorting order.

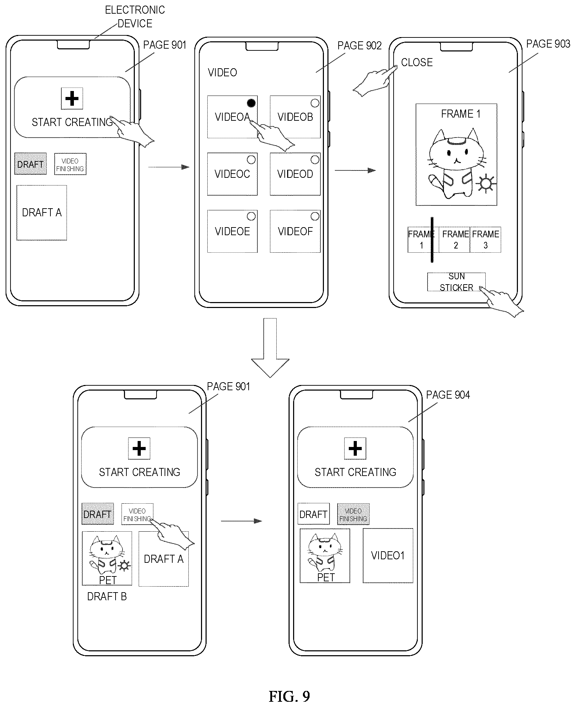

Next, the process of displaying the first covers on the second page will be discussed in conjunction with FIG. 9.

FIG. 9 is a schematic diagram of a process for displaying a first cover provided in an embodiment of the present disclosure. Reference is made to FIG. 9, which includes an electronic device. The display pages of the electronic device include page 901, page 902, page 903, and page 904. Page 901 includes a start creating control, a draft control, and a video finishing control. The area under the draft control of page 901 is a draft aggregation page, which includes Draft A. When the user clicks the start creating control, the electronic device jumps from page 901 to page 902.

Referring to page 902, which includes Video A, Video B, Video C, Video D, Video E, and Video F. When the user clicks on Video A and confirms, the electronic device jumps from page 902 to page 903. Among them, page 903 is an editing page of Video A, which includes 3 frames, and the position of the editing track is the first frame of Video A. When the user clicks on a sun sticker, the electronic device adds the sun sticker to the frame 1. When the user clicks on the close control, the electronic device jumps from page 903 to page 901. Draft B is added to the draft area of page 901. When the user clicks on the video finishing control, the draft aggregation page in page 901 jumps to the second page, resulting in page 904.

Reference is made to page 904. The second page includes videos with "pet" text, Video 1, and Video 2. Among them, Draft A corresponds to Video 1, and Draft B corresponds to a vVideo with "pet" text. In this way, every time the electronic device creates a video edit draft, it will automatically create a video corresponding to the video edit draft, improving the efficiency and accuracy of video editing.

It should be noted that the video editing operation of the video edit draft and the video editing operation of the first target video corresponding to the video edit draft may be the same or different.

It should be noted that the cover of the newly created first video may include the text "new", which reminds the user that the first video is the latest created video. After the electronic device creates the new video or after a preset duration, the text "new" in the cover of the first video is canceled. In this way, the user experience may be improved.

Optionally, the electronic device may delete the first cover corresponding to the first target video on the second page in response to the user's touch operation on the first cover.

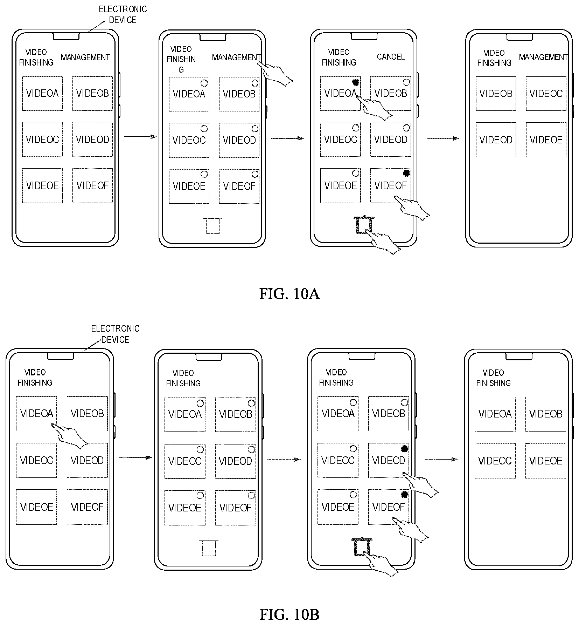

Next, in conjunction with FIGS. 10A-10B, the process of deleting the first cover corresponding to the first target video will be explained.

FIG. 10A is a schematic diagram of a process for deleting a first target video provided in an embodiment of the present disclosure. Reference is made to FIG. 10A, which includes: an electronic device. The display page of the electronic device includes a video finishing control, a management control, video A, video B, video C, video D, video E, and video F. When the user clicks on the management control, the selection control is displayed in the upper right corner of each video, and the deletion control is displayed at the bottom of the display page.

As shown in FIG. 10A, the management control is updated to a cancel control. When the user clicks on Video A and Video F, the selection controls of Video A and Video F are highlighted, and the delete control is highlighted. When the user clicks on the delete control, the electronic device deletes Video A and Video F, and the display page of the electronic device includes Video B, Video C, Video D, and Video E.

FIG. 10B is a schematic diagram of another process for deleting the first target video provided in the present embodiment. Reference is made to FIG. 10B, which includes an electronic device. The display page of the electronic device includes a video finishing control, a management control, video A, video B, video C, video D, video E, and video F. When the user long presses video A (or any area of the display page), a selection control is displayed in the upper right corner of each video, and a deletion control is displayed at the bottom of the display page.

As shown in FIG. 10B, when the user clicks on Video D and Video F, the selection controls of Video D and Video F is highlighted, and the deletion control is highlighted. When the user clicks on the deletion control, the electronic device deletes Video D and Video F. The display page of the electronic device includes Video A, Video B, Video C, and Video E. In this way, the electronic device may flexibly delete the first target video and improve the flexibility of control.

Optionally, when the electronic device deletes the first target video, the electronic device may also display a second confirmation control for the deletion operation, which will not be detailed in embodiments of the present disclosure.

Embodiments of the present disclosure provide a method for displaying a first target video, comprising: obtaining a target image of the first target video, obtaining the video content of the first target video, determining the target text based on the video content, generating a first cover of the first target video based on the target image and the target text, obtaining the creation time of the first video, and displaying the first cover corresponding to the first target video on the second page based on the creation time. In the above method, the electronic device may display the latest first target video in front of the second page, thereby improving the display effect of the first target video.

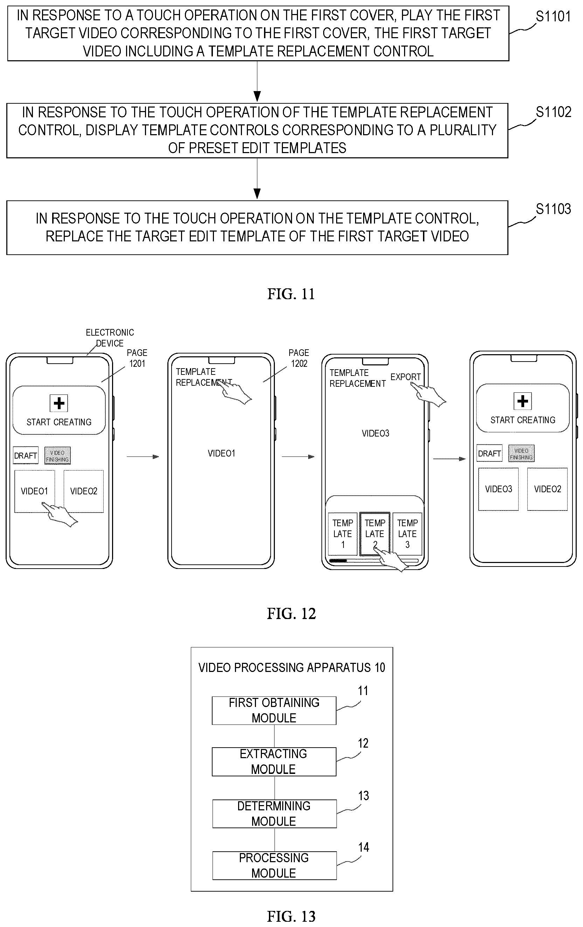

Based on any of the above embodiments, the video processing method further includes a method of replacing the target edit template of the first target video after displaying the first target video on the second page. In the following, the method of replacing the target edit template will be explained in conjunction with FIG. 11.

FIG. 11 is a schematic diagram of a method for replacing a target edit template provided in an embodiment of the present disclosure. Reference is made to FIG. 11. The method includes:

S1101, in response to a touch operation on the first cover, playing the first target video corresponding to the first cover. The first target video includes a template replacement control.

Optionally, the first target video includes a template replacement control. For example, the upper right corner of the first target video includes a template replacement control. When the user clicks on the first cover in the second page, the electronic device may play the first target video corresponding to the first cover.

S1102, in response to the touch operation of the template replacement control, displaying template controls corresponding to a plurality of preset edit templates.

Optionally, the template controls corresponding to the plurality of preset edit templates may be displayed according to the following feasible implementation: in response to the touch operation on a template replacement control, displaying template controls corresponding to the plurality of preset edit templates. For example, when the user clicks on the template replacement control of the first target video, the video edit application may display template controls corresponding to the plurality of preset edit templates at the bottom of the first target video.

S1 103, in response to the touch operation on the template control, replacing the target edit template of the first target video.

Optionally, when the user clicks on the template control, the electronic device may replace the target edit template in the first target video with the preset edit template corresponding to the template control.

Optionally, in response to the touch operation of the template control, the target edit template of the first target video is replaced, specifically, a first edit template is obtained. For example, when the user clicks on the template control corresponding to the preset edit template A, the video edit application determines the preset edit template A as the first edit template. When the user clicks on the template control corresponding to the preset edit template B, the video edit application determines the preset edit template B as the first edit template.

Optionally, the first edit template is used to record indication information for the third video editing operation. The second video editing operation in the first target video is replaced with the third video editing operation to obtain the second target video. The second target video has the editing effect of the third video editing operation. For example, after processing the video materials A and B with the target edit template, the first target video is obtained, and the transition effect A is included between the video materials A and B in the first target video. If the third video editing operation of the first edit template includes adding the transition effect B between the first video material and the second video material, the second target video may be obtained after processing the first target video with the first edit template, whereby the transition effect B is included between the video materials A and B in the second target video.

Next, the process of replacing the target edit template will be explained in conjunction with FIG. 12.

FIG. 12 is a schematic diagram of a process for replacing a target edit template provided in an embodiment of the present disclosure. Reference is made to FIG. 12, which includes an electronic device. The display page of the electronic device includes page 1201 and page 1202. Page 1201 includes a start creating control, a draft control, and a video finishing control. The lower area of the video finishing control is the second page, which includes video 1 and video 2. When the user clicks on video 1, the electronic device jumps from page 1201 to page 1202.

Referring to page 1202, it is a play page of video 1, which also includes a template replacement control. After the user clicks the template replacement control, page 1202 displays the export control and displays template controls corresponding to the plurality of preset edit templates such as template 1, template 2, and template 3 at the bottom. When the user clicks on the template control corresponding to template 2, the electronic device processes the material in video 1 through the video editing operation in template 2 to obtain video 3, and plays video 3 on page 1202. When the user clicks the export control, the electronic device may save video 3 and jump to page 1201, where video 1 in page 1201 is updated to video 3. In this way, after the electronic device creates a video based on the video edit draft, the user may replace the template of the finished video, thereby improving the flexibility of video editing.

It should be noted that when the electronic device plays the first target video, the video edit application may also display a sharing control. When the user clicks the sharing control, the video edit application may share the first target video with other applications.

The present disclosure provides a method for replacing a target edit template, comprising: in response to a touch operation on the first cover, playing a first target video corresponding to the first cover; in response to a touch operation on the template replacement control, displaying template controls corresponding to multiple preset edit templates, responding to a touch operation on the template control, obtaining a first edit template, and replacing the second video editing operation in the first target video with the third video editing operation corresponding to the first edit template to obtain a second target video with the effect of the third video editing operation. In this way, the electronic device may replace the generated video edit template to improve the flexibility of video editing and the accuracy of video editing.

FIG. 13 is a schematic diagram of the structure of a video processing apparatus provided in an embodiment of the present disclosure. Refering to FIG. 13, the video processing apparatus 10 includes a first obtaining module 11, an extracting module 12, a determining module 13, and a processing module 14, wherein:
the first obtaining module 11 is configured to obtain a video edit draft, the video edit draft being used to record an initial multimedia material and indication information of a first video editing operation for the initial multimedia material, the initial multimedia material comprising a video material and/or an image material;
the extracting module 12 is configured to extract the initial multimedia material from the video edit draft;
the determining module 13 is configured to determine, based on the initial multimedia material, a target edit template that matches the initial multimedia material, the target edit template being used to record indication information of a second video editing operation; and
the processing module 14 is configured to process, based on the target edit template, the initial multimedia material according to the second video editing operation, to obtain a first target video having an editing effect of the second video editing operation.

In one possible implementation, the determining module 13 is further configured to:
analyze content of the initial multimedia material to obtain a content tag corresponding to the initial multimedia material; and
determine, based on the content tag, the target edit template that matches the initial multimedia material.

In one possible implementation, the determining module 13 is further configured to:
process the initial multimedia material with the first model to obtain the content tag,
wherein the first model is obtained by learning with a pluratliy of sets of samples, and the pluratliy of sets of samples comprise sample multimedia materials and sample content tags corresponding to the sample multimedia materials.

In one possible implementation, the determining module 13 is further configured to:
if the content tag indicates that the number of images of the initial multimedia material is greater than or equal to the first threshold, or if the content tag indicates that the number of videos of the initial multimedia material is greater than or equal to the second threshold, or if the content tag indicates that the video duration of the initial multimedia material is greater than or equal to the third threshold, determine the target edit template from the pluratlity of preset edit templates based on the content tag.

In one possible implementation, the first obtaining module 11 is further configured to:
if a video edit application does not enable an automatic draft video creation function, display a first page which is a function setting page; and in response to a trigger operation on a first control in the first page, enable the automatic draft video creation function and obtaining the video edit draft, the first control being a switch control of the automatic draft video creation function; and
if the video edit application enables the automatic draft video creation function, obtain the video edit draft at an ending of editing of the initial multimedia material.

In one possible implementation, the first obtaining module 11 is further configured to:
in response to a touch operation on a second control in a second page, display the first page, the second page being used to present the first target video, the second control being used to jump to the first page.

The video processing apparatus provided in these embodiments may be used to execute technical solutions of embodiments of the above method. They have similar implementation principles and technical effects, which are not detailed here.

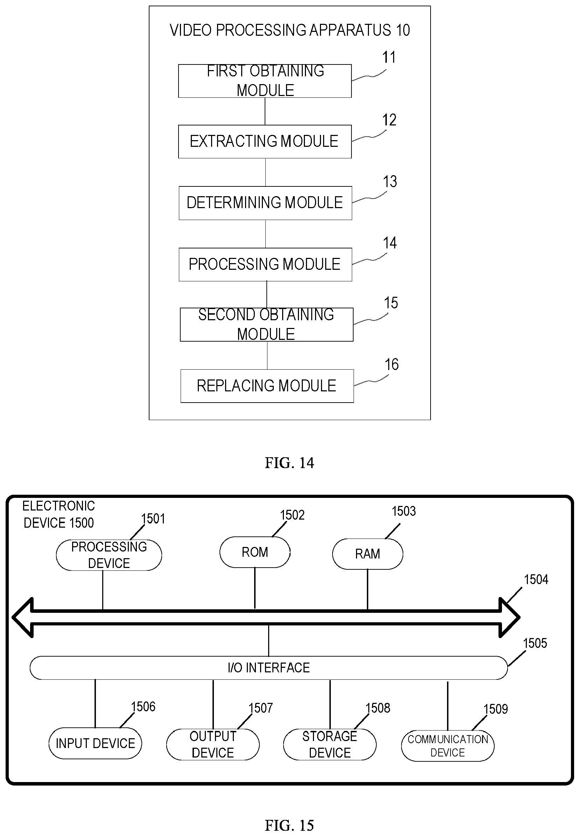

FIG. 14 is a schematic diagram of the structure of another video processing apparatus provided in embodiments of the present disclosure. Reference is made to FIG. 14. On the basis of the embodiments shown in FIG. 13, the video processing apparatus 10 further includes a second obtaining module 15, which is configured to:
obtain a target image of the first target video;
generate a first cover of the first target video based on the target image; and
display the first target video in a second page based on the first cover.

In one possible implementation, the second obtaining module 15 is further configured to:
obtain a video content of the first target video;
determine a target text based on the video content; and
generate the first cover of the first target video based on the target image and the target text.

In one possible implementation, the second obtaining module 15 is further configured to:
obtain a creation time instant of the first object video; and
display, based on the creation time instant, the first cover corresponding to the first target video in the second page.

In one possible implementation, the video processing device further includes a replacing module 16, which is configured to:
in response to a touch operation on the first cover, play the first target video of the first cover, the first target video comprising a template replacement control;
in response to a touch operation on the template replacement control, display template controls corresponding to a plurality of preset edit templates;
in response to a touch operation on the template controls, replace the target edit template of the first target video.

In one possible implementation, the replacing module 16 is further configured to:
obtain a first edit template, the first edit template being used to record indication information of a third video editing operation; and
replace the second video editing operation in the first target video with the third video editing operation to obtain the second target video, the second target video having an editing effect of the third video editing operation.

The video processing apparatus provided in these embodiments may be used to execute technical solutions of embodiments of the above method. They have similar implementation principles and technical effects, which are not detailed here.

FIG. 15 is a schematic diagram of the structure of an electronic device provided in embodiments of the present disclosure. Reference is made to FIG. 15, which shows a schematic diagram of the structure of an electronic device 1500 suitable for implementing embodiments of the present disclosure. The electronic device 1500 may be an terminal device or a server. The terminal device may include but is not limited to mobile terminals such as mobile phones, laptops, digital broadcast receivers, Personal Digital Assistants (PDAs), Portable Android Devices (PADs), Portable Multimedia Players (PMPs), and onboard terminals (such as onboard navigation terminals), as well as fixed terminals such as digital TVs, desktop computers, etc. The electronic device shown in FIG. 15 is only an example and should not bring any restrictions on the functionality and scope of use of embodiments of the present disclosure.

As shown in FIG. 15, the electronic device 1500 may include a processing device (such as a Central Processor, graphics processing unit, etc.) 1501, which may perform various appropriate actions and processes based on programs stored in Read Only Memory (ROM) 1502 or programs loaded from storage device 1508 into Random Access Memory (RAM) 1503. In RAM 1503, various programs and data required for the operation of the electronic device 1500 are also stored. The processing device 1501, ROM 1502, and RAM 1503 are connected to each other through a bus 1504. The input/output (I/O) interface 1505 is also connected to the bus 1504.

Typically, the following devices may be connected to the I/O interface 1505, including but not limited to, an input device 1506 such as touch screens, touchpads, keyboards, mice, cameras, microphones, accelerometers, gyroscopes, etc.; an output device 1507 including, for example, liquid crystal displays (LCDs), speakers, vibrators, etc.; a storage device 1508 including magnetic tapes, hard disks, etc.; and a communication device 1509. The communication device 1509 may allow electronic device 1500 to communicate via wire or wirelessly with other devices to exchange data. Although FIG. 15 shows an electronic device 1500 with various apparatuses, it should be understood that it is not required to implement or have all of the apparatuses shown. More or fewer apparatuses may be implemented or provided instead.

In particular, according to the embodiments of the present disclosure, the process described above with reference to the flowchart may be implemented as a computer software program. For example, the embodiments of the present disclosure include a computer program product that includes a computer program carried on a computer-readable medium, the computer program containing program code for performing the method shown in the flowchart. In such embodiments, the computer program may be downloaded and installed from the network through the communication device 1509, or from the storage device 1508, or from the ROM 1502. When the computer program is executed by the processing device 1501, the above functions defined in the methods of the present disclosure are performed. The embodiments of the present disclosure include a computer program that implements the above functions defined in the methods of the present disclosure when executed by a processor.

It should be noted that the computer-readable medium described above in this disclosure may be a computer-readable signal medium or a computer-readable storage medium or any combination thereof. The computer-readable storage medium may be, for example, but not limited to, an electrical, magnetic, optical, electromagnetic, infrared, or semiconductor system, device, or any combination thereof. More specific examples of computer-readable storage media may include but are not limited to: an electrical connection with one or more wires, a portable computer disk, a hard disk, a random access memory (RAM), a read-only memory (ROM), an erasable programmable read-only memory (Electrical Programmable ROM, EPROM, or flash memory), an optical fiber, a portable compact disk read-only memory (CD-ROM), an optical storage device, a magnetic storage device, or any suitable combination thereof. In this disclosure, a computer-readable storage medium may be any tangible medium containing or storing a program that may be used by or in conjunction with an instruction execution system, apparatus, or device. In this disclosure, computer-readable signal media may include data signals propagated in baseband or as part of a carrier wave, which carry computer-readable program code. Such propagated data signals may take many forms, including but not limited to electromagnetic signals, optical signals, or any suitable combination thereof. Computer-readable signal media may also be any computer-readable medium other than computer-readable storage media, which may send, propagate, or transmit programs for use by or in combination with instruction execution systems, devices, or devices. The program code contained on the computer-readable medium may be transmitted using any suitable medium, including but not limited to: wires, optical cables, radio frequency (RF), etc., or any suitable combination thereof.

The computer-readable medium may be included in the electronic device, or it may exist alone without being assembled into the electronic device.

The computer-readable medium carries one or more programs that, when executed by the electronic device, cause the electronic device to perform the method shown in the above embodiments.

Computer program code for performing the operations of the present disclosure may be written in one or more programming languages, or combinations thereof, including Object Oriented programming languages such as Java, Smalltalk, C++, as well as conventional procedural programming languages such as "C" or similar programming languages. The program code may be executed entirely on the user's computer, partially on the user's computer, as a standalone software package, partially on the user's computer, partially on the remote computer, or entirely on the remote computer or server. In the case of a remote computer, the remote computer may be connected to the user's computer via any type of network, including a local area network (LAN) or a wide area network (WAN), or may be connected to an external computer (e.g., via the Internet using an Internet service provider).

The flowcharts and block diagrams in the accompanying drawings illustrate the architecture, functions, and operations of the system, method, and computer program product that may be implemented in accordance with various embodiments of the present disclosure. In this regard, each block in the flowcharts or block diagrams may represent a module, program segment, or portion of code that contains one or more executable instructions for implementing a specified logical function. It should also be noted that in some alternative implementations, the functions marked in the blocks may also occur in a different order than those marked in the drawings. For example, two consecutive blocks may actually be executed substantially in parallel, and they may sometimes be executed in a reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operation, or may be implemented using a combination of dedicated hardware and computer instructions.

The units described in embodiments of the present disclosures may be implemented by means of software or by means of hardware, whereby the name of the unit does not constitute a limitation on the unit itself under certain circumstances, for example, the first obtaining unit may also be described as "a unit that obtains at least two internet protocol addresses."

The functions described above in the present disclosure may be performed at least in part by one or more hardware logic components. For example, without limitation, example types of hardware logic components that may be used include: Field Programmable Gate Arrays (FPGAs), Application Specific Integrated Circuits (ASICs), Application Specific Standard Products (ASSPs), System on Chip (SOCs), Complex Programmable Logic Devices (CPLDs), and so on.

In the context of this disclosure, machine-readable media may be tangible media that may contain or store programs for use by or in conjunction with instruction execution systems, devices, or devices. Machine-readable media may be machine-readable signal media or machine-readable storage media. Machine-readable media may include, but are not limited to, electronic, magnetic, optical, electromagnetic, infrared, or semiconductor systems, devices, or devices, or any suitable combination thereof. More specific examples of machine-readable storage media may include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination thereof.

First, according to one or more embodiments of the present disclosure, a video processing method is provided, which includes:
obtaining a video edit draft, the video edit draft being used to record an initial multimedia material and indication information of a first video editing operation for the initial multimedia material, the initial multimedia material comprising a video material and/or an image material;
extracting the initial multimedia material from the video edit draft;
determining, based on the initial multimedia material, a target edit template that matches the initial multimedia material, the target edit template being used to record indication information of a second video editing operation; and
processing, based on the target edit template, the initial multimedia material according to the second video editing operation, to obtain a first target video having an editing effect of the second video editing operation.

According to one or more embodiments of the present disclosure, determining the target edit template that matches the initial multimedia material based on the initial multimedia material includes:
analyzing content of the initial multimedia material to obtain a content tag corresponding to the initial multimedia material; and
determining, based on the content tag, the target edit template that matches the initial multimedia material.

According to one or more embodiments of the present disclosure, analyzing content of the initial multimedia material to obtain a content tag corresponding to the initial multimedia material includes:
processing the initial multimedia material with the first model to obtain the content tag;
wherein the first model is obtained by learning with a pluratliy of sets of samples, and the pluratliy of sets of samples comprise sample multimedia materials and sample content tags corresponding to the sample multimedia materials.

According to one or more embodiments of the present disclosure, determining the target edit template that matches the initial multimedia material based on the content tag includes:
if the content tag indicates that the number of images of the initial multimedia material is greater than or equal to a first threshold, or if the content tag indicates that the number of videos of the initial multimedia material is greater than or equal to the second threshold, or if the content tag indicates that the video duration of the initial multimedia material is greater than or equal to the third threshold, determining the target edit template from the plurality of preset edit templates based on the content tag.

According to one or more embodiments of the present disclosure, obtaining a video edit draft includes:
if a video edit application does not enable an automatic draft video creation function, displaying a first page which is a function setting page; in response to a trigger operation on a first control in the first page, enabling the automatic draft video creation function and obtaining the video edit draft, the first control being a switch control of the automatic draft video creation function; and
if the video edit application enables the automatic draft video creation function, obtaining the video edit draft at an ending of editing of the initial multimedia material.

According to one or more embodiments of the present disclosure, displaying the first page includes:
in response to a touch operation on a second control in a second page, displaying the first page, the second page being used to present the first target video, the second control being used to jump to the first page.

According to one or more embodiments of the present disclosure, after obtaining the first target video, the method further includes:
obtaining a target image of the first target video;
generating a first cover of the first target video based on the target image; and
displaying the first target video in a second page based on the first cover.

According to one or more embodiments of the present disclosure, generating the first cover of the first target video based on the target image includes:
obtaining a video content of the first target video;
determining a target text based on the video content; and
generating the first cover of the first target video based on the target image and the target text.

According to one or more embodiments of the present disclosure, displaying the first cover in the second page includes:
obtaining a creation time instant of the first object video;
displaying, based on the creation time instant, the first cover corresponding to the first target video in the second page.

According to one or more embodiments of the present disclosure, after displaying the first cover on the second page, the method further includes:
in response to a touch operation on the first cover, playing the first target video of the first cover, the first target video comprising a template replacement control;
in response to a touch operation on the template replacement control, displaying template controls corresponding to a plurality of preset edit templates;
in response to a touch operation on the template controls, replacing the target edit template of the first target video.

According to one or more embodiments of the present disclosure, replacing the target edit template of the first target video in response to a touch operation on the template controls includes:
obtaining a first edit template, the first edit template being used to record indication information of a third video editing operation; and
replacing the second video editing operation in the first target video with the third video editing operation to obtain the second target video, the second target video having an editing effect of the third video editing operation.

In the above method, since the electronic device may automatically add a second video editing operation that matches the initial multimedia material to the initial multimedia material in the video edit draft, and then generate a finished video corresponding to the video edit draft without manually editing one by one, the complexity of the editing operation can be reduced and the efficiency of editing can be improved.

In the second aspect, the present disclosure provides a video processing device, which includes a first obtaining module, an extracting module, a determination module, and a processing module, wherein:
the first obtaining module is configured to obtain a video edit draft, the video edit draft being used to record an initial multimedia material and indication information of a first video editing operation for the initial multimedia material, the initial multimedia material comprising a video material and/or an image material;
the extracting module is configured to extract the initial multimedia material from the video edit draft;
the determining module is configured to determine, based on the initial multimedia material, a target edit template that matches the initial multimedia material, the target edit template being used to record indication information of a second video editing operation; and
the processing module is configured to process, based on the target edit template, the initial multimedia material according to the second video editing operation, to obtain a first target video having an editing effect of the second video editing operation.

According to one or more embodiments of the present disclosure, the determining module is further configured to:
analyze content of the initial multimedia material to obtain a content tag corresponding to the initial multimedia material; and
determine, based on the content tag, the target edit template that matches the initial multimedia material.

According to one or more embodiments of the present disclosure, the determining module is further configured to:
process the initial multimedia material with the first model to obtain the content tag,
wherein the first model is obtained by learning with a pluratliy of sets of samples, and the pluratliy of sets of samples comprise sample multimedia materials and sample content tags corresponding to the sample multimedia materials.

According to one or more embodiments of the present disclosure, the determining module is further configured to:
if the content tag indicates that the number of images of the initial multimedia material is greater than or equal to the first threshold, or if the content tag indicates that the number of videos of the initial multimedia material is greater than or equal to the second threshold, or if the content tag indicates that the video duration of the initial multimedia material is greater than or equal to the third threshold, determine the target edit template from the pluratlity of preset edit templates based on the content tag.

According to one or more embodiments of the present disclosure, the first obtaining module is further configured to:
if a video edit application does not enable an automatic draft video creation function, display a first page which is a function setting page; and in response to a trigger operation on a first control in the first page, enable the automatic draft video creation function and obtaining the video edit draft, the first control being a switch control of the automatic draft video creation function; and
if the video edit application enables the automatic draft video creation function, obtain the video edit draft at an ending of editing of the initial multimedia material.

According to one or more embodiments of the present disclosure, the first obtaining module is further configured to:
in response to a touch operation on a second control in a second page, display the first page, the second page being used to present the first target video, the second control being used to jump to the first page.

The video processing apparatus provided in these embodiments may be used to execute technical solutions of embodiments of the above method. They have similar implementation principles and technical effects, which are not detailed here.

According to one or more embodiments of the present disclosure, the video processing apparatus further includes a second obtaining module, which is configured to:
obtain a target image of the first target video;
generate a first cover of the first target video based on the target image; and
display the first target video in a second page based on the first cover.

According to one or more embodiments of the present disclosure, the second obtaining module is further configured to:
obtain a video content of the first target video;
determine a target text based on the video content; and
generate the first cover of the first target video based on the target image and the target text.

According to one or more embodiments of the present disclosure, the second obtaining module is further configured to:
obtain a creation time instant of the first object video; and
display, based on the creation time instant, the first cover corresponding to the first target video in the second page.

According to one or more embodiments of the present disclosure, the video processing device further includes a replacing module, which is configured to:
in response to a touch operation on the first cover, play the first target video of the first cover, the first target video comprising a template replacement control;
in response to a touch operation on the template replacement control, display template controls corresponding to a plurality of preset edit templates;
in response to a touch operation on the template controls, replace the target edit template of the first target video.

According to one or more embodiments of the present disclosure, the replacing module is further configured to:
obtain a first edit template, the first edit template being used to record indication information of a third video editing operation; and
replace the second video editing operation in the first target video with the third video editing operation to obtain the second target video, the second target video having an editing effect of the third video editing operation.

In a third aspect, the present disclosure provides an electronic device comprising a processor and a memory;
the memory storing computer-executed instructions, and
the processor executing the computer-executed instructions stored in the memory to cause the processor to implement video processing methods of the first aspect as described above and various aspects that may be involved in the first aspect.

In a fourth aspect, the present disclosure provides a computer-readable storage medium having computer-executed instructions stored thereon, which, when executed by a processor, cause the video processing methods of the first aspect as described above and various aspects that may be involved in the first aspect to be implemented.

In a fifth aspect, the present disclosure provides a computer program product comprising a computer program which, when executed by a processor, causes the video processing methods of the first aspect as described above and various aspects that may be involved in the first aspect to be implemented.

In a sixth aspect, the present disclosure provides a computer program, when executed by a processor, causing the video processing methods of the first aspect as described above and various aspects that may be involved in the first aspect to be implemented.

It should be noted that the modifications of "one" and "multiple" mentioned in this disclosure are illustrative and not restrictive. Those skilled in the art should understand that unless otherwise specified in the context, they should be understood as "one or more".

The names of the messages or information exchanged between multiple devices in this public implementation are for illustrative purposes only and are not intended to limit the scope of these messages or information.

It will be appreciated that, before using the technical solutions disclosed in the various embodiments of the present disclosure, should be based on relevant laws and regulations through an appropriate manner to inform the user of the type of personal information involved in the present disclosure, the scope of use, usage scenarios, and obtain the user's authorization.

For example, in response to receiving an active request from a user, a prompt message is sent to the user to explicitly prompt the user that the operation requested to be performed will need to obtain and use the user's personal information. Thus, the user may autonomously select whether to provide personal information to software or hardware such as electronic devices, applications, servers, or storage media that perform operations of the disclosed technical solutions based on the prompt message.

As an optional but non-limiting implementation, in response to receiving an active request from the user, the prompt information is sent to the user, for example, in the form of a pop-up window, which may present the prompt information in the form of text. In addition, the pop-up window may also carry a selection control for the user to "agree" or "disagree" to provide personal information to the electronic device.

It can be understood that the above notification and user authorization process are only illustrative and do not limit the implementation of this disclosure. Other methods that meet relevant laws and regulations can also be applied to the implementation of this disclosure.

It can be understood that the data involved in this technical solution (including but not limited to the data itself, data acquisition or use) should comply with the requirements of corresponding laws, regulations, and relevant provisions. The data can include information, parameters, and messages, such as flow indication information.

The above description is only the best embodiment of the present disclosure and an explanation of the technical principles used. Those skilled in the art should understand that the scope of the disclosure involved in this disclosure is not limited to technical solutions composed of specific combinations of the above technical features, but should also cover other technical solutions formed by arbitrary combinations of the above technical features or their equivalent features without departing from the above disclosure concept. For example, technical solutions formed by replacing the above features with (but not limited to) technical features with similar functions disclosed in this disclosure.

In addition, although various operations are depicted in a specific order, this should not be understood as requiring these operations to be performed in the specific order shown or in a sequential order. In certain environments, multitasking and parallel processing may be advantageous. Similarly, although several specific implementation details are included in the above discussion, these should not be construed as limiting the scope of the present disclosure. Certain features described in the context of individual embodiments can also be implemented in combination in a single embodiment. Conversely, various features described in the context of a single embodiment can also be implemented separately or in any suitable subcombination in multiple embodiments.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A video processing method, comprising:
obtaining a video edit draft, the video edit draft being used to record an initial multimedia material and indication information of a first video editing operation for the initial multimedia material, the initial multimedia material comprising a video material and/or an image material;
extracting the initial multimedia material from the video edit draft;
determining, based on the initial multimedia material, a target edit template that matches the initial multimedia material, the target edit template being used to record indication information of a second video editing operation; and
processing, based on the target edit template, the initial multimedia material according to the second video editing operation, to obtain a first target video having an editing effect of the second video editing operation.

2. The method according to claim 1, wherein determining the target edit template that matches the initial multimedia material based on the initial multimedia material comprises:
analyzing content of the initial multimedia material to obtain a content tag corresponding to the initial multimedia material; and
determining, based on the content tag, the target edit template that matches the initial multimedia material.

3. The method according to claim 2, wherein analyzing content of the initial multimedia material to obtain a content tag corresponding to the initial multimedia material comprises:
processing the initial multimedia material with the first model to obtain the content tag;
wherein the first model is obtained by learning with a pluratliy of sets of samples, and the pluratliy of sets of samples comprise sample multimedia materials and sample content tags corresponding to the sample multimedia materials.

4. The method according to claim 2 or 3, wherein determining the target edit template that matches the initial multimedia material based on the content tag comprises:
determining, based on the content tag, the target edit template from a pluratily of preset edit templates if:
the content tag indicates that a number of images of the initial multimedia material is greater than or equal to a first threshold, or
the content tag indicates that a number of videos of the initial multimedia material is greater than or equal to a second threshold, or
the content tag indicates that a video duration of the initial multimedia material is greater than or equal to a third threshold.

5. The method according to any of claims 1-4, wherein obtaining the video edit draft comprises:
if a video edit application does not enable an automatic draft video creation function,
displaying a first page which is a function setting page;
in response to a trigger operation on a first control in the first page, enabling the automatic draft video creation function and obtaining the video edit draft, the first control being a switch control of the automatic draft video creation function; and
if the video edit application enables the automatic draft video creation function,
obtaining the video edit draft at an ending of editing of the initial multimedia material.

6. The method according to claim 5, wherein displaying the first page comprises:
in response to a touch operation on a second control in a second page, displaying the first page, the second page being used to present the first target video, the second control being used to jump to the first page.

7. The method according to any of claims 1-6, wherein, after obtaining the first target video, the method further comprises:
obtaining a target image of the first target video;
generating a first cover of the first target video based on the target image; and
displaying the first target video in a second page based on the first cover.

8. The method according to claim 7, wherein generating the first cover of the first target video based on the target image comprises:
obtaining a video content of the first target video;
determining a target text based on the video content; and
generating the first cover of the first target video based on the target image and the target text.

9. The method according to claim 7 or 8, wherein displaying the first cover in the second page comprises:
obtaining a creation time instant of the first object video;
displaying, based on the creation time instant, the first cover corresponding to the first target video in the second page.

10. The method according to any of claims 7-9, wherein, after displaying the first cover in the second page, the method further comprises:
in response to a touch operation on the first cover, playing the first target video of the first cover, the first target video comprising a template replacement control;
in response to a touch operation on the template replacement control, displaying template controls corresponding to a plurality of preset edit templates;
in response to a touch operation on the template controls, replacing the target edit template of the first target video.

11. The method according to claim 10, wherein replacing the target edit template of the first target video in response to a touch operation on the template controls comprises:
obtaining a first edit template, the first edit template being used to record indication information of a third video editing operation; and
replacing the second video editing operation in the first target video with the third video editing operation to obtain the second target video, the second target video having an editing effect of the third video editing operation.

12. A video processing apparatus, comprising a first obtaining module, an extracting module, a determining module and a processing module, wherein:
the first obtaining module is configured to obtain a video edit draft, the video edit draft being used to record an initial multimedia material and indication information of a first video editing operation for the initial multimedia material, the the initial multimedia material comprising a video material and/or an image material;
the extracting module is configured to extract the initial multimedia material from the video edit draft;
the determining module is configured to determine, based on the initial multimedia material, a target edit template that matches the initial multimedia material, the target edit template being used to record indication information of a second video editing operation; and
the processing module is configured to process, based on the target edit template, the initial multimedia material according to the second video editing operation, to obtain a first target video having an editing effect of the second video editing operation.

13. An electronic device, comprising a processor and a memory,
the memory storing computer-executed instructions, and
the processor executing the computer-executed instructions stored in the memory to cause the processor to implement the video processing method according to any of claims 1-11.

14. A computer readable storage medium having computer-executed instructions stored thereon, which, when executed by a processor, cause the video processing method according to any of claims 1-11 to be implemented.

15. A computer program product comprising a computer program which, when executed by a processor, causes the video processing method according to any of claims 1-11 to be implemented.

16. A computer program, when executed by a processor, causing the video processing method according to any of claims 1-11 to be implemented.
